(19) Europäisches Patentamt
European Patent Office
Office européen des brevets

(11) EP 1 366 663 A1

(12) EUROPEAN PATENT APPLICATION
published in accordance with Art. 158(3) EPC

(43) Date of publication:
**03.12.2003 Bulletin 2003/49**

(21) Application number: **02703932.0**

(22) Date of filing: **07.03.2002**

(51) Int Cl.[7]: **A01N 31/04**, A01N 31/14, A01N 37/02, A01N 37/04, A01N 37/12, A01N 37/18, A01N 37/36, A01N 43/16, A01G 7/00

(86) International application number:
**PCT/JP02/02136**

(87) International publication number:
**WO 02/071842 (19.09.2002 Gazette 2002/38)**

(84) Designated Contracting States:
**AT BE CH CY DE DK ES FI FR GB GR IE IT LI LU MC NL PT SE TR**

(30) Priority: **09.03.2001 JP 2001067543**
**09.03.2001 JP 2001067544**
**09.03.2001 JP 2001067545**

(71) Applicant: **Kao Corporation**
**Tokyo 103-8210 (JP)**

(72) Inventors:
- **SUZUKI, Tadayuki**
  **Wakayama-shi, Wakayama 640-8580 (JP)**
- **HAYASHI, Toshio**
  **Wakayama-shi, Wakayama 640-8580 (JP)**
- **KURITA, Kazuhiko**
  **Wakayama-shi, Wakayama 640-8580 (JP)**
- **KAMEI, Masatoshi**
  **Wakayama-shi, Wakayama 640-8580 (JP)**

(74) Representative: **HOFFMANN - EITLE**
**Patent- und Rechtsanwälte**
**Arabellastrasse 4**
**81925 München (DE)**

# (54) METHOD OF IMPROVING CROP

(57) Provided is a method of applying at least one compound (A) selected from (1) a specific monovalent or bivalent alcohol, (2) a specific ether compound, (3) a specific aliphatic acid or an ester compound thereof, (4) a specific organic acid derivative, and (5) a glycerin derivative to various farm products, thereby increasing the yield of the farm products, improving the quality thereof, or improving the low-temperature tolerance thereof.

EP 1 366 663 A1

## Description

Technical Field which the invention belongs to

The present invention relates to a method for increasing the yield of farm products, improving the quality thereof, and improving the low-temperature tolerance thereof.

Prior Art

It is an important theme for agricultural production to promote the growth of farm products and increase the yield thereof per unit area so as to increase in revenue. Usually, the three primary nutrients of nitrogen, phosphorus and potassium, which are indispensable for the growth of plants, trace metal elements, and other nutrients are blended with base fertilizer or additional fertilizer so as to be supplied to plants. However, even if the concentration of nutrients in fertilizer is made high, improvement in the growth increment or the yield of farm products is restricted. The use of a large amount of fertilizer causes the amount of nutrients in soil to be excessive, so that the balance of the absorption thereof becomes bad. Thus, the stagnation of the growth of plants, and so on occur so as to cause problems such that a target yield increase cannot be attained or the quality thereof, such as the sugar content (Brix. value) or the freshness (greenness degree) thereof is not raised. Under such a situation, the use of combination of various plant growth regulators has been carried out.

As the plant growth regulators , for example, plant growth regulators typical examples of which are gibberellin and auxin are used to regulate growth or morphogenesis, such as germination, root generation, extension, flowering and fruiting. However, effects of these substances are many-sided and complicated. The use thereof is limited. There have been known techniques that a foliar spray agent using an oligosaccharide (JP-A No. 9-322647) or a liquid fertilizer which contains a saccharide, a mineral, an amino acid, a seaweed extract, or a fermentation extract of microorganisms is sprayed on foliage or is fertilized in a solution form. However, under the present circumstances, it cannot be said that the techniques are practically satisfactory from the viewpoint of an increase in the yield of farm products. JP-A No. 55-40674 discloses that an alcohol having 30 carbon atoms is used as a plant growth promoter. However, the effect of increasing the yield of farm products is not sufficient. JP-A No. 2000-198703 also discloses a plant activator comprising a monovalent alcohol having 12 to 24 carbon atoms, but a final increase in the yield of farm products and an improvement in the quality thereof are not referred to.

The quality of farm products is very important from the viewpoint of commercial value. In general, examples of the quality which is desired to be improved in farm products include (1) components in yielded products (for example, the content of ascorbic acid in a fruit, the sugar content therein, and the concentrations of nitrate ions therein), and (2) external appearance of yeild products (for example, apparent beauty of flowers or houseplants). For example, chrysanthemums are classified on the basis of the grades ("Shu" and "Yu") thereof and the classes (2L, L, M and S) thereof. About the grades "Shu" and "Yu", the grade "Shu " is a higher grade. About the classes, the weight is made larger in the order of S $\rightarrow$ M $\rightarrow$ L $\rightarrow$ 2L. Hitherto, however, chemical agents, such as fertilizers or agricultural chemicals, which are added to farm products, have produced effects on the growth promotion of the farm products, the extermination of harmful insects, or others, but have not produced sufficient effects on improvement of the quality.

Farm products suffer from various stresses on the basis of temperature, water content and so on during the cultivation thereof, change in environment, addition of various chemicals, and other factors. In general, farm products have proper growth temperatures. If the temperatures of the farm products are outside the range thereof, in particular, if the farm products undergo temperature change to a low-temperature range or a low-temperature stress such as a snowfall or hoarfrost, the farm products suffer from serious stress.

Farm products have a certain measure of tolerance against such low-temperature stresses. However, if a low-temperature stress exceeding the tolerance is given thereto, the farm products become extinct or suffer from diseases, so that serious damages (damage from cold weather, frost damage, freezing damage and so on) are caused. Accordingly, temperature control is performed by cultivation in a hot house such as a greenhouse, or the tolerance against low-temperature stress is improved by plant breeding. In such a way, farm products are set against low-temperature stress. However, it cannot be said that these methods are easy methods. Thus, measures for an improvement therein are desired. JP-A No. 57-26608 discloses a cold tolerance improver comprising an aqueous solution of a water-soluble condensed phosphate. However, advantageous effects thereof are insufficient.

Disclosure of the Invention

The present invention provides a method of increasing the yield of farm products, improving the quality thereof, or improving the low-temperature tolerance thereof by applying at least one compound (A) selected from the following (1) to (5) to the farm products. The invention provides a method of applying the compound A to farm products, thereby

improving the farm products in this way.

(1) a compound represented by the following formula (1-1):

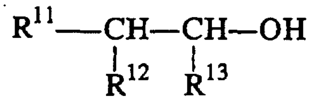

(1 - 1)

wherein $R^{11}$ represents a hydrocarbon group having 10 to 22 carbon atoms, $R^{12}$ represents a hydrogen atom, a hydroxyl group, or a hydrocarbon group having 1 to 24 carbon atoms, and $R^{13}$ represents a hydrogen atom or a hydrocarbon group having 1 to 24 carbon atoms;

(2) a compound represented by the following formula (2-1):

$$R^{21}\text{-O-(AO)}_m\text{-}R^{22} \qquad (2\text{-}1)$$

wherein $R^{21}$ represents a hydrocarbon group which has 12 to 24 carbon atoms and may have one or more hydroxyl groups, $R^{22}$ represents a hydrogen atom, or a hydrocarbon group which has 1 to 24 carbon atoms and may have one or more hydroxyl groups, AO represents an oxyalkylene group which has 2 to 4 carbon atoms, m is the average number of added alkylene oxide molecules and represents a numerical value of 0 to 5, provided that when m is 0, $R_{22}$ is not a hydrogen atom;

(3) a compound represented by the following formula (3-1):

$$R^{31}\text{-COO-(AO)}_n\text{-}R^{32} \qquad (3\text{-}1)$$

wherein $R^{31}$ represents a hydrocarbon group which has 11 to 29 carbon atoms and may have one or more hydroxyl groups, $R^{32}$ represents a hydrogen atom and a hydrocarbon group which has 1 to 30 carbon atoms and may have one or more hydroxyl groups, $-COR^{33}$ (wherein $R^{33}$ represents a hydrocarbon group having 11 to 23 carbon atoms), or a counter ion, AO represents an oxyalkylene group which has 2 to 4 carbon atoms, and n is the average number of added alkylene oxide molecules and represents a numerical value of 0 to 5;

(4) an organic acid derivative wherein a group or groups containing 1 to 30 carbon atoms is/are bonded to an organic acid having at least two functional groups at a position or positions of the functional group(s); and

(5) a glycerin derivative.

The compounds (1) to (5) are referred to as (A1) to (A5) components, respectively.

When the compound is the (1), the compound in the formula (1-1) is preferably a monovalent alcohol having 12 to 24 carbon atoms.

In the above-mentioned method, at least one of a surfactant (B), a chelating agent (C) and a fertilizer (D) other than the compounds (1) to (5) can be further contained. The invention also provides an improver composition for farm products which comprises at least one selected from the compounds (A), the (B), the (C) and the (D).

The present invention is also a method of applying the compound (A) to farm products which are being grown, thereby improving the farm products. As a result, the yield of the farm products increases, the quality of the farm products is improved and the low-temperature tolerance of the farm products is improved.

Furthermore, the present invention provides the use of the compound (A) for increasing the yield of farm products, improving the quality thereof, and improving the low-temperature tolerance thereof. The present invention provides a farm product yield increasing agent, a farm product quality improver and a farm product low-temperature tolerance improver, that is, improvers for farm products which have effects as described above.

Detailed Description of the Invention

In the present invention, the word "farm products" is a generic term of plants cultivated by people without regard to the objects of the cultivation or the degree of the management of fertilizing cultivation, and includes meanings of not only farm products cultivated in fields of rice and other crops in an ordinary manner but also garden trees,

houseplants, lawns, roadside trees, and further includes forest trees, which are hardly subjected to cultivation with fertilizer.

However, any green single cell, which propagates as a single cell, such as chlorella, is excluded from the yield increase referred to in the present invention. The yield increasing agent for farm products of the present invention is an agent which is supplied to farm products in order to increase the yield of the farm products. The wording "yield increase or increase in the yield" means an increase in the yield of sites (fruits, leaves, root stocks, or the like) which are using-targets of farm products.

The quality improver for farm products of the present invention is an agent supplied to farm products in order to improve the quality of the farm products.

The wording "quality improvement or improvement in the quality" means that the quality of sites (fruits, leaves, root stocks, or the like) which are using-targets of farm products, for example, a component therein or the external appearance thereof, is shifted into a favorable direction (a rise in nutritive value, improvement in taste, or the like). The component referred to herein is, specifically, a general component such as water content, protein, lipid, carbohydrate, or ash content; a mineral such as sodium, potassium or calcium; a vitamin such as vitamin A, vitamin C, or folic acid; a fatty acid; cholesterol; dietary fiber; or the like. The external appearance includes measurable factors, such as shape, color, odor, cortex, fleshiness, thickness, gloss, the degree of flowering, and the degree of damage; and immeasurable factors, such as beauty, suppleness, freshness, fashionability, and balance.

The wording "low-temperature tolerance" means tolerance against biotic stress, non-biotic stress, and biotic/non-biotic complex stress which result from low temperature. The tolerance is the capability that farm products survive in the state that they are slightly damaged or are never damaged under stress, and means relative reception power such that when farm products encounter improper environment, their tissues grow or survive. In particular, in the present invention, the wording means tolerance against stress resulting from low temperature. In the present invention, the wording "tolerance" also includes the meaning of resistance. Specific examples of the low-temperature tolerance include chilling tolerance, cold tolerance, freezing tolerance, encasting tolerance, snow tolerance, frost tolerance, winter hardiness, winter drought tolerance, snow mold resistance, and winter survival. The low-temperature tolerance improver for farm products of the present invention is supplied to farm products in order to improve these low-temperature tolerances.

The wording "chilling tolerance (resistance)" widely means the tolerance of paddy-rice and pulses against low temperature. However, the so-called chilling tolerance kind means a kind which does not cause any sterility trouble easily by low temperature at the stage of reduction division, that is, a cold-weather damage resisting kind in many cases. The cold-weather damage of rice is caused mainly by obstructing the generation or development of pollen by low temperature. The low-temperature tolerance at this stage (booting stage (bud stage in the case of pulses)) is referred to, in particular, as chilling tolerance at booting (bud) stage. Even if solid pollen is normally generated, fertilization thereof is hindered when the pollen encounters low temperature at flowering stage. As a result, sterility is caused. The tolerance against this is referred to, in particular, as chilling tolerance at flowering stage. In the direct planting of rice, the degree of the growth thereof immediately after the germination at low temperature produces a large effect on subsequent growth thereof. This chilling tolerance at initial growth stage is referred to, in particular, as chilling tolerance at seeding stage.

The wording "cold tolerance (resistance)" means the nature that farm products can survive against freezing cold. The wording includes snow resistance and frost tolerance in a wide sense, but represents freezing tolerance in a narrow sense. In order that plants or insects can survive at low temperature, they have high capability of overcooling the insides of their cells so that they are not easily frozen, or they need to have such tolerance that they are not damaged even if the state that the outside of their cells is continuously frozen.

The wording "freezing tolerance (resistance)" means a nature included in the category of the cold tolerance, and this nature is the nature that plants resist against low temperature under the freezing point. This nature is particularly important in an intensely cold district in a light snowfall area. However, even in a heavy snowfall area, such as in Hokkaido or Canada, plants are exposed to the freezing point before continuous snow-cover; therefore, the freezing tolerance is important for autumn-planting wheat or perennial grass.

The wording "frost tolerance (resistance)" means the tolerance of farm products against low temperature (-1°C to - 3°C) at the time of the first frost of the year or frost of late spring, and is equivalent to the cold tolerance in the point that the two wordings refer to tolerance against such a low temperature that farm products are frozen. In particular, about summer crops, their stocks and leaves suffer from troubles based on low temperature at seedling stage, or suffer from temperature-rise damage based on low temperature in autumn.

The wording "encasting tolerance (resistance)" means tolerance against the following: in cold districts, farm products are submerged by a rainfall before a regular low-temperature snowfall or a rainfall at the stage of snowmelt in early spring and thereafter the air temperature falls rapidly, whereby the farm products may be submerged to be suffocated or their tissues may be destroyed.

The wording "winter drought tolerance (resistance)" means the nature that farm products resist lack of water

content due to freezing, strong wind and so on in winter. In general, the tolerance includes both of a case in which farm products have a function or structure for not causing lack of water content (the opening and shutting of stomata, development in their root systems, and so on), and resistance against damage due to lack of water and damage when the farm products absorb water again, and is closely related to the freezing tolerance.

The wording "snow mold resistance (tolerance)" means resistance against snow mold disease generated by various snow molds which are parasitic on or harmful to farm products under snow cover in winter. Since harm due to snow mold disease is conspicuous under snow cover conditions, snow tolerance may be used in the same sense as the snow mold resistance. However, strictly speaking, these are different natures.

The wording "snow tolerance (resistance, or endurance)" means the intensity of the capability that biennial farm products pass winter under snow cover. Even in intensely cold districts, a dark state is generated at a temperature of about 0°C if the thickness of snow cover becomes 50 cm or more. Thus, the farm products cannot cause photosynthesis and consume stored nourishment. As a result, the freezing tolerance and the snow mold resistance thereof are lowered and further the farm products are easily subjected to physiological damage such as moisture damage at the time of snowmelt. Furthermore, when fruit trees undergo a heavy snowfall, mechanical snow damage is caused. The wording means the nature that farm products resist these complex stresses concerned with snow.

The wording "winter hardiness" means the nature that farm products resist the whole of stresses caused in winter. Biennial farm products suffer from various stresses caused in low-temperature environment in winter, for example, low temperature (the cold tolerance (including the freezing tolerance) ) , snow cover (the snow tolerance), disease (the snow mold tolerance). However, effects which are given to the farm products by the individual stresses are not easily distinguished; therefore, the nature that the farm products resist the whole of stresses caused in winter is generically named winter hardiness.

The wording "winter survival" means a nature including the capability that farm products recover from the damage of winter decay and germination power, as well as the winter hardiness. The nature is decided from the degree of withering after wintering, the degree of leaf-withering, a subsequent regeneration situation, and so on.

<(A) component>

(A1) component

In the general formula (1-1), the hydrocarbon group of each of $R^{11}$, $R^{12}$ and $R^{13}$ may be saturated or unsaturated, is preferably saturated, may be linear, branched, or cyclic, and is preferably linear or branched, particularly preferably linear. The total number of carbons in the hydrocarbon group may be odd or even, and is preferably even.

The total of the carbon number of each of $R^{11}$, $R^{12}$ and $R^{13}$ is preferably 50 or less, more preferably from 12 to 48, and still more preferably from 16 to 44.

In the general formula (1-1), the carbon number of $R^{11}$ is preferably from 14 to 22, more preferably from 14 to 20, and still more preferably from 14 to 18. In the compound represented by the general formula (1-1), the total carbon number is preferably from 12 to 48, more preferably from 16 to 28, and particularly preferably from 16 to 24. Furthermore, a compound having a total carbon number of 12 to 24 and one hydroxyl group is preferred, and a compound having a total carbon number of 16 to 22 and one hydroxyl group is particularly preferred. Specific examples of the compound represented by the general formula (1-1) include compounds as described below.

(A1-1)

1-Alkanol represented by $CH_3(CH_2)_{o-1}OH$ wherein o is an integer of 12 to 24, preferably 16 to 24, and more preferably 16 to 20. That is, examples of the compound represented by the general formula (1-1) include a monovalent alcohol having 12 to 24 carbon atoms. Specific examples thereof include 1-dodecanol, 1-tridecanol, 1-tetradecanol, 1-pentadecanol, 1-hexadecanol, 1-heptadecanol, 1-octadecanol, 1-nonadecanol, 1-icosanol, 1-heneicosanol, 1-docosanol. 1-tricosanol, and 1-tetracosanol.

(A1-2)

2-Alkanol represented by $CH_3CH (OH) (CH_2)_{p-3}CH_3$ wherein p is an integer of 12 to 24, preferably 16 to 24, and more preferably 16 to 20. Specific examples thereof include 2-dodecanol, 2-tridecanol, 2-tetradecanol, 2-pentadecanol, 2-hexadecanol, 2-heptadecanol, 2-octadecanol, 2-nonadecanol, and 2-icosanol.

(A1-3)

Terminal unsaturated alcohol represented by $CH_2=CH(CH_2)_{q-2}OH$ wherein q is an integer of 12 to 24, preferably 16 to 24, and more preferably 16 to 20. Specific examples thereof include 11-dodecene-1-ol, 12-tridecene-1-ol, and 15-hexadecene-1-ol.

(A1-4)

Examples of other unsaturated long-chain alcohols include oleyl alcohol, elaidyl alcohol, linoleyl alcohol, linolenyl alcohol, and eleostearyl alcohol (α or β) and ricinoyl alcohol.

(A1-5)

1,2-Diol represented by $HOCH_2CH(OH)\ (CH_2)_{r-2}H$ wherein r is an integer of 12 to 24, preferably 16 to 24, and more preferably 16 to 20. Specific examples thereof include 1,2-dodecanediol, 1,2-tetradecanediol, 1,2-hexadecanediol, and 1,2-octadecanediol.

Among the above-mentioned (A1-1) to (A1-5), the (A1-1), (A1-2), (A1-4) and (A1-5) are preferred. The (A1-1), (A1-2) and (A1-4) are more preferred. The (A1-1) and (A1-4) are still more preferred. The (A1-1) is particularly preferred.

(A2) component

In the general formula (2-1) of the (A2) component, the hydrocarbon group of each of $R^{21}$ and $R^{22}$ may be saturated or unsaturated, is preferably saturated, may be linear, branched, or cyclic, and is preferably linear or branched, particularly preferably linear. The hydrocarbon group of each of $R^{21}$ and $R^{22}$ may have one or more hydroxyl groups. The total number of carbons in $R^{21}$ and $R^{22}$ is preferably 50 or less, more preferably from 12 to 48, and still more preferably from 16 to 44. In the compound represented by the general formula (2-1), the total carbon number thereof is preferably from 13 to 48, more preferably from 24 to 48, and particularly preferably from 32 to 40. AO or AOs in the general formula (2-1) is/are preferably one or more groups selected from oxyethylene, oxypropylene and oxybutylene groups. AOs, the number of which is m, may be the same or different, and may be in a random or block form. Specific examples of the compound represented by the general formula (2-1) include compounds as described below. Compounds of (A2-1) are preferred.

(A2-1)

Di-n-alkyl ether represented by $CH_3\ (CH_2)_{s-1}$-O- $(CH_2)_{s-1}CH_3$ wherein s is an integer of 12 to 24, preferably 16 to 24, and more preferably 16 to 20. Specific examples thereof include didodecyl ether, ditridecyl ether, ditetradecyl ether, dipentadecyl ether, dihexadecyl ether, and dioctadecyl ether.

(A2-2)

Vinyl ether represented by $CH_2$=CH-$OR^{3a}$ wherein $R^{3a}$ is an alkyl group or alkenyl group having 12 to 24 carbon atoms, preferably 16 to 24 carbon atoms. Specific examples thereof include vinyl lauryl ether, vinyl myristyl ether, vinyl cetyl ether, vinyl stearyl ether, vinyl oleyl ether, and vinyl linoleyl ether.

When the compound of the general formula (2-1) has a hydrophilic group and a hydrophobic group, the Griffin's HLB thereof is preferably less than 10, more preferably 8 or less, still more preferably 7 or less, and particularly preferably 5 or less. The Griffin's equation is represented by HLB = (the molecular weight of the hydrophilic group moiety/ the molecular weight of the surfactant) × (100/5) ("New Primer of Surfactant", published by Sanyo Chemical Industries, Ltd. in November 1, 1985, page 128).

(A3) component

In the general formula (3-1) of the (A3) component, the hydrocarbon group of each of $R^{31}$ and $R^{32}$ may be saturated or unsaturated, is preferably saturated, may be linear, branched, or cyclic, and is preferably linear or branched, particularly preferably linear. The total number of carbons in $R^{31}$ and $R^{32}$ is preferably 50 or less, more preferably from 12 to 48, and still more preferably from 16 to 44.

The hydrocarbon group of $R^{31}$ in the general formula (3-1) may have one or more hydroxyl groups, and the carbon number thereof is preferably from 11 to 29, more preferably from 13 to 21, and still more preferably from 15 to 19. The hydrocarbon group may be saturated or unsaturated, is preferably saturated, may be linear, branched, or cyclic, and is preferably linear or branched, particularly preferably linear. Specific examples of $R^{31}$ include alkyl groups such as undecyl, tridecyl, pentadecyl, heptadecyl, nonadecyl, and heneicosyl groups; and alkenyl groups such as pentadecenyl, heptadecenyl, and nonadecenyl groups. Preferred are alkyl groups such as pentadecyl, heptadecyl,

and nonadecyl groups; and alkenyl groups such as pentadecenyl, heptadecenyl, and nonadecenyl groups. Particularly preferred are alkyl groups such as pentadecyl, heptadecyl, and nonadecyl groups.

$R^{32}$ in the general formula (3-1) is a hydrogen atom, a hydrocarbon group (preferably, an alkyl or alkenyl group) which has 1 to 30 carbon atoms, preferably 1 to 22 carbon atoms, and may have one or more hydroxyl groups, $-COR^{33}$ wherein $R^{33}$ is a hydrocarbon group having 11 to 23 carbon atoms, or a counter ion. Specific examples of $R^{32}$ include alkyl groups such as lauryl, tetradecyl, hexadecyl, octadecyl, arachinyl and behenyl group; acyl groups such as lauroyl, myristoyl, palmitoyl, stearoyl, arachidoyl, and behenoyl groups; and alkenyl groups such as tetradecenyl, hexadecenyl, oleyl, codoyl, and docosenyl groups. Preferred are alkyl groups such as hexadecyl, octadecyl, and arachinyl groups; acyl groups such as palmitoyl, stearoyl, and arachidoyl groups; alkenyl groups such as hexadecenyl, oleyl, and codoyl groups. Particularly preferred are alkyl groups such as hexadecyl, octadecyl, and arachinyl groups. Specific examples of the counter ion include alkali metals such as sodium and potassium; alkali earth metals such as calcium and magnesium; alkylamine salts such as trimethylamine and triethylamine; and alkanolamine salts such as ethanolamine. Preferred are alkali metals and alkali earth metals.

AO or AOs in the general formula (3-1) is/are preferably one or more groups selected from oxyethylene, oxypropylene and oxybutylene groups. AOs, the number of which is n, may be the same or different, and may be in a random or block form.

From improvement of farm products, it is preferred in the present invention that n in the general formula (3-1) is from 0 to 5, $R^{31}$ is an alkyl or alkenyl group having 13 to 21 carbon atoms, $R^{32}$ is a hydrogen atom, an alkyl or acyl group having 1 to 22 carbon atoms, an alkenyl group having 2 to 22 carbon atoms, or a counter ion (provided that when n is not zero, the counter ion is excluded).

When the compound of the general formula (3-1) has a hydrophilic group and a hydrophobic group, the above-mentioned Griffin's HLB thereof is preferably less than 10, more preferably 8 or less, still more preferably 7 or less, and particularly preferably 5 or less.

(A4 component)

Examples of the functional group of the (A4) component include carboxyl, hydroxyl and amino groups. The organic acid preferably has at least one hydroxyl group. Examples of the group bonded to the functional group include alkyl, alkenyl, alkylamino, and oxyalkylene groups. As the (A4) component, a compound represented by the general formula (4-1) is preferred.

$$A\text{-}(B)_a\text{-}C \qquad (4\text{-}1)$$

wherein A and C each independently represent a group selected from $-COOX$, $-COOR^{41}$, $-CON(R^{42})(R^{43})$, $-R^{44}$, $-OH$ and $-OR^{45}$; and B represents a group selected from

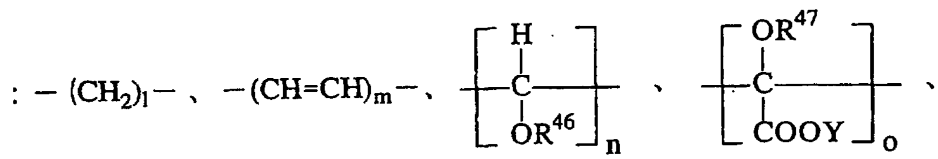

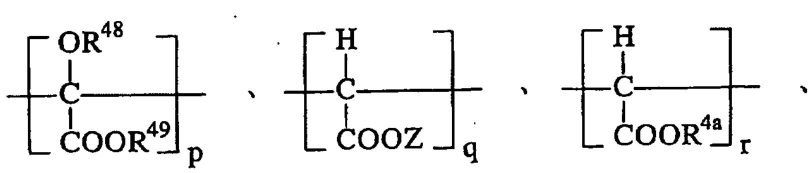

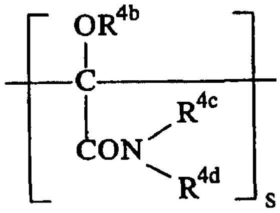 及び 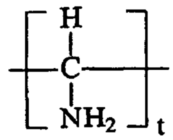

wherein X, Y and Z each independently represent a hydrogen atom or a counter ion; $R^{41}$, $R^{44}$ and $R^{49}$ each independently represent a hydrocarbon group having 1 to 30 carbon atoms; $R^{45}$ represents a group selected from

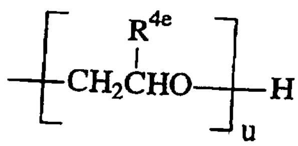 、 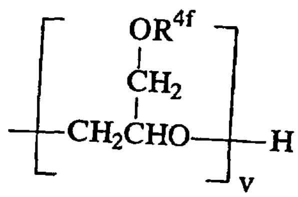 、

a hydrocarbon group having 1 to 30 carbon atoms, and an acyl group having 1 to 30 carbon atoms;

$R^{42}$, $R^{43}$, $R^{46}$, $R^{47}$, $R^{4a}$, $R^{4b}$, $R^{4c}$, $R^{4d}$, $R^{4e}$ and $R^{4f}$ each independently represent a hydrogen atom or a hydrocarbon group having 1 to 30 carbon atoms;

a is a numerical value of 0 or 1 or more;

l, m, n, o, p, q, r, s and t each independently represent a numerical value of 0 to 10;

u and v each independently represent a numerical value of 1 to 50; these are selected in such a manner that a group or groups having 1 to 30 carbon atoms is/are bonded to at least one of the functional groups in the molecule; and when both of A and C are groups selected from $-R^{44}$, -OH and $-OR^{45}$, B is not a group selected from

$-(CH_2)_l-$ 、 $-(CH=CH)_m-$ 、 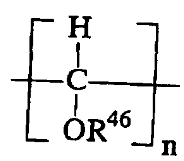

and

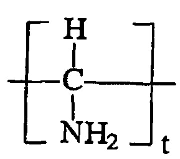

In the general formula (4-1), each of $R^{41}$, $R^{44}$ and $R^{49}$ is a hydrocarbon group having 1 to 30 carbon atoms, and $R^{41}$ and $R^{49}$ are preferably hydrocarbon groups having 12 to 26 carbon atoms, more preferably hydrocarbon groups having 14 to 22 carbon atoms. $R^{44}$ is preferably a hydrocarbon group having 1 to 10 carbon atoms, more preferably a hydrocarbon group having 1 to 5 carbon atoms. $R^{41}$, $R^{44}$ and $R^{49}$ are preferably alkyl and alkenyl groups. The hydrocarbon groups of $R^{41}$, $R^{44}$ and $R^{49}$, which are preferably alkyl and alkenyl group, may be saturated or unsaturated, are preferably saturated, may be linear, branched, or cyclic, and are preferably linear or branched, more preferably

linear. Specific examples of $R^{41}$, $R^{44}$ and $R^{49}$ include alkyl groups such as lauryl, tetradecyl, hexadecyl, octadecyl, eicosyl (alkyl having 20 carbon atoms), behenyl (alkyl having 22 carbon atoms) groups; alkenyl groups such as C14F1 (the number following C is the number of carbon atoms, and the number following F is the number of unsaturated bonds. The same rule is correspondingly applied to the following), C16F1, C18F1, C20F1 and C22F1 groups.

In the general formula (4-1), $R^{42}$, $R^{43}$, $R^{46}$, $R^{47}$, $R^{4a}$, $R^{4b}$, $R^{4c}$, $R^{4d}$, $R^{4e}$ and $R^{4f}$ are each independently a hydrogen atom or a hydrocarbon group having 1 to 30 carbon atoms, preferably 12 to 26 carbon atoms, and more preferably 14 to 22 carbon atoms, and are each preferably the hydrocarbon group. The hydrocarbon group is preferably alkyl and alkenyl groups. The hydrocarbon group, which is preferably an alkyl or alkenyl group, may be saturated or unsaturated, is preferably saturated, may be linear, branched, or cyclic, and is preferably linear or branched, particularly preferably linear.

In the general formula (4-1), X, Y and Z are each a hydrogen atom, or a counter ion. Specific examples of the counter ion include alkali metals such as sodium and potassium; alkali earth metals such as calcium and magnesium; alkylamine salts such as trimethylamine and triethylamine; and alkanolamine salts such as ethanolamine. Preferred are alkali metals and alkali earth metals.

In the general formula (4-1), a is the total number of Bs. When two or more Bs are present in the general formula (4-1), that is, in the case of $a \geq 2$, Bs may be the same or different among the above-defined groups.

The organic acid which makes the (A4) component is preferably a hydroxycarboxylic acid such as citric acid, gluconic acid, malic acid, lactic acid, or tartaric acid, and is more preferably citric acid.

When the compound of the general formula (4-1) has a hydrophilic group and a hydrophobic group, the above-mentioned Griffin's HLB thereof is preferably less than 10, more preferably 8 or less, still more preferably 7 or less, and particularly preferably 5 or less.

(A5 component)

The glycerin derivative of the (A5) component is preferably a compound selected from an ester of glycerin and an acid (hereinafter referred to as a glycerin ester), an ether of glycerin and a hydroxyl group-containing compound (hereinafter referred to as a glycerin ether), a condensate of glycerin or a derivative thereof, and glyceric acid or a derivative thereof.

The acid which constitutes the glycerin ester may be an organic acid or an inorganic acid. Examples of the organic acid include organic acids having 1 to 30 carbon atoms, preferably 4 to 30 carbon atoms, and more preferably 12 to 24 carbon atoms. Examples of the inorganic acid include phosphoric acid, sulfuric acid, and carbonic acid. The ester of the inorganic acid may be in a salt form. The glycerin ester is preferably an ester of glycerin and an organic acid, that is, a monoester, diester or triester of glycerin and an organic acid. As the glycerin organic acid triester, there can be used a synthesized triester, or an oil and fat, for example, an animal oil and fat such as beef tallow, lard, fish oil or whale oil, or a vegetable oil and fat such as coconut oil, palm oil, palm stearin oil, castor oil, soybean oil or olive oil. An oil and fat is preferred.

Examples of the hydroxyl group-containing compound which constitutes the glycerin ether include alcohols having 1 to 30 carbon atoms, preferably 4 to 30 carbon atoms, and more preferably 12 to 24 carbon atoms. Examples of the glycerin ester include glycerin monoalkyl ethers such as batyl alcohol, isostearyl glyceryl ether, and behenyl glyceryl ether. Diethers or triethers are allowable. The glycerin ether of the present invention may be an alkylene oxide (hereinafter abbreviated to AO) adduct of glycerin. The average number of added molecules of AO in the adduct is preferably from 1 to 30, more preferably from 1 to 10, and particularly preferably from 1 to 5. An AO adduct of a mixture of an oil and fat and glycerin can also be used. The average number of added molecules of AO in this adduct is preferably from 1 to 30, more preferably from 1 to 10, and particularly preferably from 1 to 5.

Examples of the condensate of glycerin or the derivative thereof include polyglycerin represented by the following general formula (5-1) and derivatives thereof.

$$RO-(XO)_{m_1}-(CH_2\underset{\displaystyle (OX)_{m_2}-OR}{\underset{|}{C}H}CH_2O)_n-(XO)_{m_3}-R \qquad (5-1)$$

wherein n is a numerical value of 2 to 50, R is a hydrogen atom or an acyl group having 2 to 31 carbon atoms, X is an alkylene group having 2 to 4 carbon atoms, and $m_1$, $m_2$ and $m_3$ are each a numerical value of 0 to 30.

Glyceric acid can be obtained by oxidation of glycerin or glyceraldehyde, or by other methods. In the present invention, a glyceric acid derivative such as a glyceric acid ester or a glyceric acid amide can also be used.

When the glycerin derivative in the present invention has a hydrophilic group and a hydrophobic group, above-mentioned the Griffin's HLB thereof is preferably less than 10, more preferably 8 or less, and particularly preferably 5 or less.

In the present invention, the (A) component preferably comprises the above-mentioned (A1) component. It is particularly preferred to use the (A1) composition together with one or more selected from the (A2) to (A5) components.

The improver for farm products of the present invention preferably comprises not only the (A) component but also at least one of a surfactant (B) [hereinafter referred to as the (B) component], a chelating agent (C) [hereinafter referred to as the (C) component] and a fertilizer (D) [hereinafter referred to as the (D) component], which are other than the compounds (1) to (5). It is particularly preferred to use both of the (B) component and the (C) component. When fertilizer is needed at the time of the application of the improver, for example, it is preferred to use the (A) component together with the (B), (C) and (D) components. When fertilizer is not needed at the time of the application, for example, it is preferred to use the (A) component together with the (B) and (C) components.

<(B) component>

It is preferred to use, as the (B) component, a surfactant as described below for emulsification, dispersion, solubility or permeation promotion of the (A) component.

Examples of a nonionic surfactant include sorbitan aliphatic acid esters, polyoxyalkylene sorbitan aliphatic acid esters, polyoxyalkylene aliphatic acid esters, glycerin aliphatic acid esters, polyoxyalkylene glycerin aliphatic esters, polyglycerin aliphatic acid esters, polyoxyalkylene polyglycerin aliphatic acid esters, sorbitol aliphatic acid esters, polyoxyalkylene sorbitol aliphatic acid esters, sucrose aliphatic acid esters, resin acid esters, polyoxyalkylene resin acid esters, polyoxyalkylene alkyl ether, polyoxyalkylene alkyl phenyl ether, alkyl(poly)glycoside, polyoxyalkylene alkyl (poly)glycoside, alkylalkanolamide and sugar type aliphatic acid amide. Examples of the sugar type aliphatic acid amide include amides having a structure wherein a hydrophobic group is amide-bonded to a sugar or sugar alcohol, for example, sugar type aliphatic acid amides such as aliphatic amides of glucose or fructose. There may also be used amides having a structure wherein a hydrophobic group is amide-bonded to a sugar having an amino group or a sugar alcohol, for example, sugar type aliphatic acid amides such as aliphatic acid amides of N-methylgulcamine. The nonionic surfactant(s) is/are preferably one or more selected from nonionic surfactants containing an ether group but containing no nitrogen atom and nonionic surfactants containing an ester group. Specifically, preferred are polyoxyalkylene (in particular, ethylene) sorbitan aliphatic acid esters, polyoxyalkylene (in particular, ethylene) glycerin aliphatic acid esters, and sucrose aliphatic acid esters.

Examples of an anionic surfactant include carboxylic acid type, sulfonic acid type, sulfate type and phosphate type surfactants. Preferred are one or more selected from carboxylic acid type and phosphate type surfactants.

Examples of the carboxylic acid type surfactant include aliphatic acids having 6 to 30 carbon atoms or salts thereof, polyhydric carboxylic acid salts, polyoxyalkylene alkyl ether carboxylic acid salts, polyoxyalkylene alkylamide ether carboxylic acid salts, rosin acid salts, dimer acid salts, polymer acid salts and tall oil fatty acid salts.

Examples of the sulfonic acid type surfactant include alkylbenzene sulfonates, alkyl sulfonates, alkylnaphthalene sulfonates, naphthalene sulfonates, diphenyl ether sulfonates, condensate salts of alkylnaphthalene sulfonic acid, and condensate salts of naphthalene sulfonic acid.

Examples of the sulfate type surfactant include alkyl sulfates, polyoxyalkylene alkyl sulfates, polyoxyalkylene alkyl phenyl ether sulfate, tri-styrenated phenol sulfates, polyoxyalkylene di-styrenated phenol sulfates, and alkylpolyglycoside sulfates.

Examples of the phosphate type surfactant include alkyl phosphates, alkyl phenyl phosphates, polyoxyalkylene alkyl phosphates, and polyoxyalkylene alkyl phenyl phosphates.

Examples of the salt include metal salts (such as Na, K, Ca, Mg and Zn), an ammonium salt, alkanolamine salts, and aliphatic amine salts.

Examples of an amphoteric surfactant include an amino acid type, a betaine type, an imidazoline type, and an amineoxide type.

Examples of the amino acid type include acylamino acid salts, acylsarcosinic acid salts, acyloylmethylaminopropionic acid salts, alkylaminopropionic acid salts, and acylamide ethylhydroxylethylmethylcarboxylic acid salts.

Examples of the betaine type include alkyldimethylbetaine, alkylhyroxyethylbetaine, acylamide propylhydroxypropylammonium sulfobetaine, acylamide propylhydroxypropylammonium sulfobetaine, acylamide propylhydroxypropylammonium sulfobetaine, ricinoleic acid amide propyldimethylcarboxymethyl ammonium betaine.

Examples of imidazoline type include alkylcarboxymethylhydroxyethylimidazolinium betaine and alkylethoxycarboxymethylimidazolinium betaine.

Examples of the amineoxide include alkyldimethylamineoxide, alkyldiethanolamineoxide, and alkylamide propylamineoxide.

The (B) components may be used alone or in a mixture form of two or more thereof. When these (B) components include polyoxyalkylene groups, the (B) components preferably have polyoxyethylene groups and the average number of added molecules thereof is from 1 to 300, preferably more than 5 and 100 or less.
About the (B) component, the Griffin's HLB thereof is preferably 10 or more, and is more preferably 12 or more.
When a monovalent alcohol having 12 to 24 carbon atoms is used as the (A) component, the (B) component is preferably at least one selected from the ester group-containing nonionic surfactant, the ether-containing nonionic surfactant which contains no nitrogen atom, the amphoteric surfactant, the carboxylic acid type anionic surfactant, and the phosphoric acid type anionic surfactant. Particularly preferred are one or more selected from the ester group-containing nonionic surfactant, and the ether-containing nonionic surfactant which contains no nitrogen atom. That is, an example of the farm product improver of the present invention is an improver comprising a monovalent alcohol having 12 to 24 carbon atoms, and one or more selected from the ester group-containing nonionic surfactant, the ether-containing nonionic surfactant which contains no nitrogen atom, the amphoteric surfactant, the carboxylic acid type nonionic surfactant and the phosphorus acid type anionic surfactant.

<(C) component>

When an organic acid having chelating capability as described below or a salt thereof is together used as the (C) component, the effect for improving farm products is further improved. Specific examples thereof include citric acid, gluconic acid, malic acid, heptonic acid, oxalic acid, malonic acid, lactic acid, tartaric acid, succinic acid, fumaric acid, maleic acid, adipic acid, oxycarboxylic acids such as glutalic acid, polyvalent carboxylic acids, potassium salts thereof, sodium salts thereof, alkanolamine salts thereof, and aliphatic amine salts thereof. The yield of farm products is also improved when a chelating agent other than the organic acid is mixed. Examples of the chelating agent to be mixed include aminocarboxylic acid type chelating agents such as EDTA, NTA and CDTA.

<(D) component>

Specific examples of the (D) component include inorganic materials and organic materials which are sources for supplying N, P, K, Ca, Mg, S, B, Fe, Mn, Cu, Zn, Mo, Cl, Si, Na or some other element, in particular, N, P, K, Ca or Mg. Examples of such inorganic materials include ammonium nitrate, potassium nitrate, ammonium sulfate, ammonium chloride, ammonium phosphate, sodium nitrate, urea, ammonium carbonate, potassium phosphate, calcium superphosphate, fused phosphate fertilizer ($3MgO \cdot CaO \cdot P_2O_5 \cdot 3CaSiO_2$), potassium sulfate, potassium chloride, calcium nitrate, hydrated lime, calcium carbonate, magnesium sulfate, magnesium hydroxide, and magnesium carbonate. Examples of the organic material include fowl droppings, cow dung, park compost, amino acid, peptone, Mieki (amino acid solution), fermentation extract, calcium salts of organic acids (such as citric acid, gluconic acid, and succinic acid), and calcium salts of aliphatic acids (such as formic acid, acetic acid, propionic acid, caprylic acid, capric acid, and caproic acid) . These fertilizer components may be used together with a surfactant. In the case that fertilizer components are sufficiently applied, as base manure, into soil as performed in outdoor cultivation of rice or vegetables, it is unnecessary to blend the present fertilizer components. In a cultivation embodiment of a type such that excessive application of base manure is avoided and fertilizer components are given in the same way as water for irrigation, as performed in a fertigation (a hydroponic soil culture) or a hydroponics, it is preferred to blend the fertilizer components.
When the (B) to (D) components are used together in the improver for farm products of the present invention, the proportion of each of the components is as follows: preferably 10 to 20000 parts by weight of the (B) component, particularly preferably, 100 to 2000 parts by weight thereof; preferably 0 to 50000 parts by weight of the (C) component, particularly preferably 10 to 5000 parts by weight thereof; and preferably 0 to 1000000 parts by weight of the (D) component, more preferably 0 to 100000 parts by weight thereof, particularly preferably 10 to 100000 parts by weight thereof per 100 parts by weight of the (A) component. The improver for farm products of the present invention can contain 0 to 5000 parts by weight of other nutrients (such as sugars, amino acids and vitamins), in particular, 10 to 500 parts by weight thereof per 100 parts of the (A) component.
The form of the improver for farm products of the present invention, which comprises the (A) component, may be any form, such as a liquid, flowable, past, wettable powder, granule, powder, or tablet form. When the improver is used, the improver is sprayed onto foliage or roots of plants in the form of aqueous dispersion or emulsion wherein the concentration of the (A) component is usually from 1 to 500 ppm.
As the method for supplying the improver for farm products of the present invention to plants, various means can be used. Examples thereof include a method of applying powder or granule thereof as direct manure, a method of spraying aqueous solution wherein the improver is diluted directly onto foliage, stems, or fruits of plants, a method of injecting the improver into soil, and a method of mixing/diluting the improver with water culturing solution or supplying solution which contacts roots, in the same way as water culture or rock wool, and then supplying the mixture.
When the improver is applied to soil in the state of powder or granule in the same way as fertilizer, it is usually

preferred to use powder or granule wherein the above-mentioned components other than water are contained at the same ratio. The powder or granule may contain an excipient for preventing the caking thereof.

Examples of farm products which can be treated with the improver for farm products of the present invention include, as fruit vegetables, cucumber, pumpkin, watermelon, melon, tomato, eggplant, sweet pepper, strawberry, okra, string bean, broad bean, pea, soybean (young soybean in the pod), and corn. The examples include, as leaf vegetables, vegetables used for pickles, such as Chinese cabbage and komatsuna, pakchoi, cabbage, cauliflower, broccoli, brussels sprouts, onion, welsh onion, garlic, scullion, leek, asparagus, lettuce, salad, celery, spinach, crown daisy, parsley, trefoil, dropwort, udo, Japanes ginger, butterbur, and labiate. The examples include, as root vegetables, radish, turnip, burdock, carrot, potato, taro, sweet potato, yam, ginger plant, and lotus root. The improver can be used for tobacco, cereals such as rice (paddy-rice), wheat and barley, and houseplants such as chrysanthemum, rose, carnation, Turkish balloon flower, sweet pea, cyclamen, tulip, pansy, freesia, phalaenopsis, marguerite, lily, and begonia.

Among the plants, preferred are cucumber, watermelon, melon, tomato, eggplant, sweet pepper, strawberry, soybean, corn, vegetables used for pickles, pakchoi, cabbage, lettuce, spinach, radish, dropwort, carrot, ginger plant, tobacco, rice, chrysanthemum, rose, carnation, Turkish balloon flower, and pansy.

Furthermore, particularly preferred are cucumber, tomato, eggplant, sweet pepper, strawberry, vegetables used for pickles, pakchoi, spinach, radish, dropwort, carrot, rice, chrysanthemum, and rose.

According to the yield increasing agent for farm products of the present invention, a remarkable effect of increasing the yield of various farm products such as fruits, vegetables and cereals can be obtained with safety. According to the quality improver for farm products of the present invention, a remarkable effect of improving the quality of various farm products such as fruits, vegetables and cereals can be obtained with safety. According to the low-temperature tolerance improver for farm products of the present invention, a remarkable effect of improving the low-temperature tolerance of various farm products such as fruits, vegetables and cereals can be obtained with safety.

Examples about an increase in the yield of farm products

Example 1 (effect on paddy-rice)

A paddy-rice "Koshihikari" was used to make a certification examination of the effect of increasing the yield thereof under the following treating conditions. Each yield increasing agent for farm products in Tables 1 and 2 was used to conduct treatment two times at the time of offshoot stageand young ear forming stage. The water depth of the present rice field was set to 5 cm, and the amount for the treatment was set in such a manner that the concentration of the (A) component in the yield increasing agent for farm products in Tables 1 and 2 would be 5.0 ppm (weight ratio) . At harvest stage, the yield of unmilled rice and yield constituting elements (the number of ears per plant, and the number of rough rices per ear, the percentage of ripened grains, and the 1000-grain weight) were examined. The measured values were compared as relative values when the value of a non-treated area was regarded as 100. The results are shown in Table 3. In the case that the yield increasing agent for farm products of the present invention was used, the yield constituting elements, that is, the number of ears per plant, the number of rough rices per ear, the percentage of ripened grains, and the 1000-grain weight were larger than those in the control area. Thus, it is understood that the effect of increasing the yield was obtained.

Table 1

| Yield increasing agent No. for farm products | | Compound name | (A)/(B)/(C) weight ratio |
|---|---|---|---|
| Invention product | 1-1 | (A)Stearyl alcohol<br>(B)POE(20) sorbitan monooleic ester<br>(C) — | 25/75/0 |
| | 1-2 | (A)Stearyl alcohol<br>(B)POE(20) sorbitan monooleic ester<br>(C)EDTA·4Na | 23/69/8 |
| | 1-3 | (A)1,2-Octadecanediol<br>(B)POE(20)sorbitan tristearic acid ester<br>(C)Citric acid·3Na | 23/69/8 |
| | 1-4 | (A)Dioctadecyl ether<br>(B)POE(60) hydrogenated castor oil<br>(C)Sodium heptonate | 25/70/5 |
| | 1-5 | (A)2-octadecanol<br>(B)POE(13) cetyl ether<br>(C) — | 33/67/0 |
| | 1-6 | (A) Stearic acid<br>(B)POE(80) hydrogenated castor oil<br>(C)Potassium oxalate | 25/70/5 |
| | 1-7 | (A)Stearyl stearate<br>(B)POE(3) lauryl ether sodium sulphate<br>(C) Citric acid | 23/69/8 |
| | 1-8 | (A)Myristic acid<br>(B)Laurylamide propylbetaine<br>(C)Fumaric acid | 25/70/5 |
| | 1-9 | (A)Distearic acid ethylene glycol ester [Emanon 3201M,Kao Corp.]<br>(B)Sucrose aliphatic acid ester [DK ester F140,Dai-ichi Kogyo Seiyaku Co.,Ltd.]<br>(C)Citric acid | 25/70/5 |
| | 1-10 | (A)$C_{18}H_{37}O(EO)_5C_{18}H_{37}$<br>(B) —<br>(C) — | 100/0/0 |
| | 1-11 | (A)$C_{18}H_{37}O(EO)_5C_{18}H_{37}$<br>(B) —<br>(C)EDTA·4Na | 70/0/30 |
| | 1-12 | (A)Batyl alcohol<br>(B)POE(20) sorbitan monooleic acid ester<br>(C)Citric acid | 23/69/8 |

Table 2

| Yield increacing agent No. for farm products | | Compound name | (A)/(B)/(C) weight ratio |
|---|---|---|---|
| Invention product | 1-13 | (A)Glyceric acid stearyl ester<br>(B)POE(20) sorbitan monooleic acid ester<br>(C)Malonic acid | 23/69/8 |
| | 1-14 | (A)Glyceric acid stearylamide<br>(B)POE(40) sorbit tetraoleic acid ester<br>(C)Malic acid | 23/69/8 |
| | 1-15 | (A)Stearic acid monoglyceride<br>(B)Alkylglucoside[Mydol 12, Kao Corp.]<br>(C)Malonic acid | 23/69/8 |
| | 1-16 | (A)Glycerin carbonate<br>(B)Alkylglucoside[Mydol 12,Kao Corp.]<br>(C) — | 25/75/0 |
| | 1-17 | (A)Hexaglycerine stearic acid ester<br>(B)POE(6) sorbitan monolauric acid ester<br>(C) — | 25/75/0 |
| | 1-18 | (A)Glyceric acid diglyceride<br>(B)POE(12) stearyl ether<br>(C) — | 25/75/0 |
| | 1-19 | (A)Citric acid $C_{18}$ monoamide<br>(B)Sucrose aliphatic acid ester<br>[DK ester F160,Dai-ichi Kogyo Seiyaku Co..Ltd.]<br>(C)Succinic acid | 23/69/8 |
| | 1-20 | (A)Citric acid $C_{18}$ alkyl monoester<br>(B)POE(20) lauryl ether<br>(C)Malic acid | 23/69/8 |
| | 1-21 | (A)Citric acid $C_{18\ diamide}$<br>(B)POE(4.5) lauryl ether sodium acetate<br>(C)EDTA·2Na | 23/69/8 |
| | 1-22 | ($A_i$)Stearyl alcohol<br>($A_{ii}$)Dioctadecyl ether<br>(B)POE(20) sorbitan monooleic acid ester<br>(C)Citric acid·3Na | 10/85/5<br>[($A_i$)/($A_{ii}$)=1/1] |
| | 1-23 | ($A_i$)Stearyl aocohol<br>($A_{iii}$)Stearic acid<br>(B)POE(80) hydrogenated castor oil<br>(C) — | 14/86/0<br>[($A_i$)/($A_{iii}$)=1/1] |
| Comparative product | 1-1 | (A) —<br>(B)POE(20) sorbitan monoleic acid ester<br>(C) — | 0/100/0 |
| | 1-2 | (A) —<br>(B)POE(3) lauryl ether sodium sulphate<br>(C) — | 0/100/0 |

In Tables 1 and 2, POE is an abbreviation of polyoxyethylene, and a numerical value inside each parenthesis is the average number of added molecules of ethylene oxide (the same rule is correspondingly applied to the following).

Table 3

| Yield increacing agent No. for farm products | | Number of ears(per plant) | number of rough rices(per ear) | Percentage of ripened grains | 1000-grain weight | Yield |
|---|---|---|---|---|---|---|
| Invention product | 1-1 | 103 | 103 | 104 | 104 | 115 |
| | 1-2 | 105 | 103 | 104 | 106 | 119 |
| | 1-3 | 103 | 103 | 103 | 103 | 113 |
| | 1-4 | 103 | 102 | 103 | 103 | 111 |
| | 1-5 | 103 | 103 | 103 | 104 | 114 |
| | 1-6 | 104 | 103 | 104 | 103 | 115 |
| | 1-7 | 104 | 102 | 103 | 102 | 111 |
| | 1-8 | 100 | 104 | 103 | 102 | 109 |
| | 1-9 | 102 | 103 | 103 | 103 | 111 |
| | 1-10 | 103 | 102 | 101 | 102 | 108 |
| | 1-11 | 103 | 103 | 103 | 103 | 113 |
| | 1-12 | 104 | 103 | 103 | 104 | 115 |
| | 1-13 | 104 | 103 | 103 | 103 | 114 |
| | 1-14 | 103 | 103 | 103 | 104 | 114 |
| | 1-15 | 103 | 103 | 103 | 103 | 113 |
| | 1-16 | 104 | 103 | 101 | 103 | 111 |
| | 1-17 | 103 | 102 | 102 | 103 | 110 |
| | 1-18 | 104 | 103 | 103 | 103 | 114 |
| | 1-19 | 103 | 103 | 102 | 105 | 114 |
| | 1-20 | 103 | 103 | 102 | 104 | 113 |
| | 1-21 | 103 | 102 | 103 | 104 | 113 |
| | 1-22 | 103 | 103 | 102 | 104 | 113 |
| | 1-23 | 104 | 102 | 102 | 103 | 111 |
| Comparative product | 1-1 | 98 | 100 | 100 | 101 | 99 |
| | 1-2 | 97 | 100 | 98 | 100 | 95 |
| Non-treated area | | 100 | 100 | 100 | 100 | 100 |

Example 2

(2-1) Effect on a soybean (young soybean in the pod)

A soybean "Sapporo Midori" was sown in soil. After one month, each yield increasing agent for farm products in Tables 1 and 2 was used to conduct foliar spray treatment one time to examine the yield increasing effect. The yield increasing agent for farm products was used in such a manner that the (A) component had a concentration of 50 ppm (weight ratio), and the amount of spraying water was set to 100 L/10a. At harvest stage, the yield was examined. The measured values were compared as relative values when the value of a non-treated area was regarded as 100. The results are shown in Table 4.

(2-2) Effect on a strawberry

A strawberry "Toyonoka" was planted and subsequently the breed was subjected to soil-irrigating treatment with each yield increasing agent for farm products in Tables 1 and 2 of Example 1 at intervals of two times per month. The yield increasing agent for farm products was used in such a manner that the (A) component had a concentration of 50 ppm (weight ratio), and the amount of treating water was set to 3000 L/10a. At harvest stage, the yield was examined. The measured values were compared as relative values when the value of a non-treated area was regarded as 100. The results are shown in Table 4.

(2-3) Effect on a tomato

A tomato "House Momotaro" was planted, and subsequently the breed was subjected to soil-irrigating treatment with each yield increasing agent for farm products in Tables 1 and 2 of Example 1 at intervals of two times per month. The yield increasing agent for farm products was used in such a manner that the (A) component had a concentration of 100 ppm (weight ratio), and the amount of treating water was set to 3000 L/10a. At harvest stage, the yield was examined. The measured values were compared as relative values when the value of a non-treated area was regarded as 100. The results are shown in Table 4.

(2-4) Effect on a spinach

A spinach "Sun Best" was sown in soil. After leaves were developed, the breed was subjected to soil-irrigating treatment four times with each yield increasing agent for farm products in Tables 1 and 2 of Example 1 at intervals of one time per week. The yield increasing agent for farm products was used in such a manner that the (A) component had a concentration of 50 ppm (weight ratio), and the amount of treating water was set to 3000 L/10a. At harvest stage, the total yield was examined. The measured values were compared as relative values when the value of a non-treated area was regarded as 100. The results are shown in Table 4.

(2-3) Effect on a burdock

A burdock was sown in soil with seed tapes. After 75 days, a mixture of an agricultural chemical [insecticide: trade name of Lannate (name of material: S-methyl-N-[(methylcarbamoyl)oxy])thioacetoimidate] and each yield increasing agent for farm products in Tables 1 and 2 was used to conduct foliar spray treatment two times at the interval of two weeks, so as to examine the yield increasing effect. The yield increasing agent for farm products was used in such a manner that the (A) component had a concentration of 50 ppm (weight ratio), and the amount of spraying water was set to 100 L/10a. At 90 days after the sowing (at harvest), the yield was examined. The measured values were compared as relative values when the value of a non-treated area was regarded as 100. The results are shown in Table 4.

Table 4

| Yield increacing agent No. for farm products | | Yield(relative weight ratio) | | | | |
|---|---|---|---|---|---|---|
| | | Soybean | Strawberry | Tomato | Spanish | Burdock |
| Invention product | 1-1 | 114 | 132 | 127 | 132 | 200 |
| | 1-2 | 120 | 135 | 130 | 137 | 210 |
| | 1-3 | 113 | 131 | 124 | 129 | 190 |
| | 1-4 | 114 | 131 | 125 | 128 | 191 |
| | 1-5 | 112 | 129 | 123 | 121 | 187 |
| | 1-6 | 114 | 130 | 125 | 127 | 195 |
| | 1-7 | 112 | 126 | 123 | 125 | 186 |
| | 1-8 | 109 | 124 | 120 | 120 | 180 |
| | 1-9 | 112 | 128 | 125 | 127 | 190 |
| | 1-10 | 111 | 123 | 120 | 121 | 182 |
| | 1-11 | 114 | 125 | 123 | 123 | 185 |
| | 1-12 | 114 | 129 | 125 | 130 | 192 |
| | 1-13 | 113 | 126 | 123 | 122 | 180 |
| | 1-14 | 113 | 127 | 124 | 123 | 184 |
| | 1-15 | 113 | 128 | 124 | 125 | 181 |
| | 1-16 | 113 | 128 | 125 | 126 | 185 |
| | 1-17 | 111 | 118 | 121 | 122 | 175 |
| | 1-18 | 112 | 126 | 123 | 121 | 189 |
| | 1-19 | 114 | 129 | 125 | 125 | 191 |
| | 1-20 | 112 | 129 | 124 | 126 | 192 |
| | 1-21 | 112 | 126 | 124 | 127 | 190 |
| | 1-22 | 111 | 125 | 120 | 126 | 187 |
| | 1-23 | 109 | 123 | 117 | 124 | 183 |
| Comparative product | 1-1 | 99 | 100 | 99 | 100 | 101 |
| | 1-2 | 98 | 98 | 98 | 99 | 97 |
| Non-treated area | | 100 | 100 | 100 | 100 | 100 |

Example 3 (effect on paddy-rice)

A paddy-rice "Kinuhikari" was used to make a certification examination of the effect of increasing the yield thereof under the following treating conditions. Each yield increasing agent for farm products in Table 5 was used to conduct treatment two times at the time of offshoot stage and young ear forming stage. At harvest stage, the yield of unmilled rice and yield constituting elements (the number of ears per plant, and the number of rough rices per ear, the percentage of ripened grains, and the 1000-grain weight) were examined. The water depth of the present rice field was set to 5 cm, and the amount for the treatment was set in such a manner that the concentration of the (A) component in the yield increasing agent for farm products in Table 5 would be 5.0 ppm (weight ratio). The measured values were compared as relative values when the value of a non-treated area was regarded as 100. The results are shown in Table 6.

Table 5

| Yield increacing agent No. for farm products | | Compound name | Treating concentration (ppm) |
|---|---|---|---|
| Invention product | 1-24 | (A)Lauryl alcohol<br>(B)POE(13) cetyl ether<br>(C) – | 50<br>25<br>0 |
| | 1-25 | (A)Myristyl alcohol<br>(B)Alkylglucoside[Mydol 12,Kao Corp.]<br>(C)Malic acid | 25<br>75<br>5 |
| | 1-26 | (A)Cetyl alcohol<br>(B)POE(80) hydrogenated castor oil<br>(C)Malonic acid | 10<br>100<br>10 |
| | 1-27 | (A)Stearyl alcohol<br>(B)POE(20) sorbitan monooleic acid ester<br>(C)EDTA・4Na | 5<br>15<br>2 |
| | 1-28 | (A)Stearyl alcohol<br>(B)POE(20) sorbitan monooleic acid ester<br>(C) – | 5<br>15<br>0 |
| | 1-29 | (A)1,2-octadecanediol<br>(B)POE(4.5) lauryl ether sodium acetate<br>(C)Succinic acid | 0.5<br>1.5<br>0.2 |
| | 1-30 | (A)2-Octadecanol<br>(B)POE(6) sorbitan monolauric acid ester<br>(C)Citric acid・3Na | 2<br>30<br>0.5 |
| | 1-31 | (A)Eicosanol<br>(B)Sucrose aliphatic acid ester [DK ester F160,Dai-ichi Kogyo Seiyaku Co.,Ltd.]<br>(C)Sodium heptonate | 5<br>50<br>2 |
| | 1-32 | (A)Tetracosanol<br>(B)Laurylamide propylbetaine<br>(C)Citric acid | 20<br>40<br>0 |
| Comparative product | 1-3 | (A) –<br>(B)POE(20) sorbitane monooleic acid ester<br>(C) – | 0<br>20<br>0 |
| | 1-4 | (A) –<br>(B)POE(3) lauryl ether sodium sulfate<br>(C) – | 0<br>50<br>0 |

Table 6

| Yield increacing agent No. for farm products | | Number of ears(per plant) | Number of rough rices (per ear) | Percentage of ripened grains | 1000-grain weight | Yield |
|---|---|---|---|---|---|---|
| Invention product | 1-24 | 102 | 100 | 102 | 103 | 107 |
| | 1-25 | 103 | 102 | 103 | 105 | 114 |
| | 1-26 | 104 | 105 | 104 | 103 | 117 |
| | 1-27 | 106 | 105 | 104 | 107 | 124 |
| | 1-28 | 105 | 105 | 104 | 105 | 120 |
| | 1-29 | 104 | 105 | 104 | 104 | 118 |
| | 1-30 | 104 | 103 | 104 | 104 | 116 |
| | 1-31 | 103 | 102 | 103 | 103 | 111 |
| | 1-32 | 101 | 103 | 103 | 103 | 110 |
| Comparative product | 1-3 | 99 | 99 | 100 | 100 | 98 |
| | 1-4 | 100 | 99 | 96 | 100 | 95 |
| Non-treated area | | 100 | 100 | 100 | 100 | 100 |

Examples about an improvement in the quality of farm products

Example 4

(4-1) Effect on a strawberry

A strawberry "Toyonoka" was planted and subsequently the breed was subjected to soil-irrigating treatment with each quality improver for farm products in Tables 7 and 8 at intervals of two times per month. The quality improver for farm products was used in such a manner that the (A) component had a concentration of 50 ppm (weight ratio), and the amount of treating water was set to 3000 L/10a. At harvest stage, the concentration of ascorbic acid in the fruits was examined. The measured values were compared as relative values when the value of a non-treated area was regarded as 100. The results are shown in Table 9.

(4-2) Effect on a tomato

A tomato "House Momotaro" was planted, and subsequently the breed was subjected to soil-irrigating treatment with each quality improver for farm products in Tables 7 and 8 at intervals of two times per month. The quality

improver for farm products was used in such a manner that the (A) component had a concentration of 100 ppm (weight ratio), and the amount of treating water was set to 3000 L/10a. At harvest stage, the concentration of ascorbic acid in the fruits and the sugar content therein were examined. The measured values were compared as relative values when the value of a non-treated area was regarded as 100. The results are shown in Table 9.

(4-2) Effect on a spinach

A spinach "Sun Best" was sown in soil. After leaves were developed, the breed was subjected to soil-irrigating treatment four times with each quality improver for farm products in Tables 7 and 8 at intervals of one time per week. The quality improver for farm products was used in such a manner that the (A) component had a concentration of 50 ppm (weight ratio), and the amount of treating water was set to 3000 L/10a. At harvest stage, the total yield was examined. The measured values were compared as relative values when the value of a non-treated area was regarded as 100. The results are shown in Table 9.

Table 7

| Quality improver No. for farm products | | Compound name | (A)/(B)/(C) weight ratio |
|---|---|---|---|
| Invention product | 2-1 | (A)Stearyl alcohol<br>(B)POE(20) sorbitan monooleic ester<br>(C) — | 25/75/0 |
| | 2-2 | (A)Stearyl alcohol<br>(B)POE(20) sorbitan monooleic acid ester<br>(C)EDTA·4Na | 23/69/8 |
| | 2-3 | (A)1,2-octadecanediol<br>(B)POE(20) sorbitan tristearic acid ester<br>(C)Citric acid·3Na | 23/69/8 |
| | 2-4 | (A)Dioctandecyl ether<br>(B)POE(60) hydrogenated castor oil<br>(C)Sodium heptonate | 25/70/5 |
| | 2-5 | (A)2-Octadecanol<br>(B)POE(13) cetyl ether<br>(C) — | 33/67/0 |
| | 2-6 | (A)Stearic acid<br>(B)POE(80) hydrogenated castor oil<br>(C)Potassium oxalate | 25/70/5 |
| | 2-7 | (A)Stearyl stearate<br>(B)POE(3) lauryl ether sodium sulphate<br>(C)Citric acid | 23/69/8 |
| | 2-8 | (A)Myristic acid<br>(B)Laurylamide propylbataine<br>(C)Fumaric acid | 25/70/5 |
| | 2-9 | (A)Distearic acid ethylene glycol ester [Emanon 3201M,Kao Corp.]<br>(B)Sucrose aliphatic acid ester [DK ester F140,Dai-ichi Kogyo Seiyaku Co.,Ltd.]<br>(C)Citric acid | 25/70/5 |
| | 2-10 | (A)$C_{18}H_{37}O(EO)_5C_{18}H_{37}$<br>(B) —<br>(C) — | 100/0/0 |
| | 2-11 | (A)$C_{18}H_{37}O(EO)_5C_{18}H_{37}$<br>(B) —<br>(C)EDTA·4Na | 70/0/30 |
| | 2-12 | (A)Batyl alcohol<br>(B)POE(20) sorbitane monooleic acid ester<br>(C)Citric acid | 23/69/8 |

Table 8

| Quality improver No. for farm products | | Compound name | (A)/(B)/(C) weight ratio |
|---|---|---|---|
| Invention product | 2-13 | (A)Glyceric acid stearyl ester<br>(B)POE(20) sorbitan monooleic acid ester<br>(C)Malonic acid | 23/69/8 |
| | 2-14 | (A)Glyseric acid stearylamide<br>(B)POE(40) sorbit tetraoleic acid ester<br>(C)Malic acid | 23/69/8 |
| | 2-15 | (A)Stearic acid monoglyceride<br>(B)Alkylglucoside[Mydol 12,Kao corp.]<br>(C)Malonic acid | 23/69/8 |
| | 2-16 | (A)Glycerin carbonate<br>(B)Alkylglucoside[Mydol 12,Kao corp.]<br>(C) − | 25/75/0 |
| | 2-17 | (A)Hexaglycerine stearic acid ester<br>(B)POE(6) sorbitan monolauric acid ester<br>(C) − | 25/75/0 |
| | 2-18 | (A)Glyceric acid diglyceride<br>(B)POE(12) stearyl eter<br>(C) − | 25/75/0 |
| | 2-19 | (A)Citric acid $C_{18}$monoamide<br>(B)Sucrose aliphatic acid ester<br>[DK ester F160,Dai-ichi Kogyo Seiyaku Co.,Ltd.]<br>(C)Succinic acid | 23/69/8 |
| | 2-20 | (A)Citric acid $C_{18}$ alkyl monoester<br>(B)POE(20) laury;l ether<br>(C)Malic acid | 23/69/8 |
| | 2-21 | (A)Citric acid $C_{18}$ diamide<br>(B)POE(4.5) lauryl ether sodium acetate<br>(C)EDTA·2Na | 23/69/8 |
| | 2-22 | ($A_i$)Stearyl alcohol<br>($A_{ii}$)Dioctadecyl ether<br>(B)POE(20) sorbitane monooleic acid ester<br>(C)Citric acid·3Na | 10/85/5<br>[($A_i$)/($A_{ii}$)=1/1] |
| | 2-23 | ($A_i$)Stearyl alcohol<br>($A_{iii}$)Stearic acid<br>(B)POE(80) hydrogenated castor oil<br>(C) − | 14/86/0<br>[($A_i$)/($A_{iii}$)=1/1] |
| Comparative product | 2-1 | (A) −<br>(B)POE(20) sorbitan monooleic acid ester<br>(C) − | 0/100/0 |
| | 2-2 | (A) −<br>(B)POE(3)lauryl ether sodium sulphate<br>(C) − | 0/100/0 |

In Tables 7 and 8, POE is an abbreviation of polyoxyethylene, and a numerical value inside each parenthesis is the average number of added molecules of ethylene oxide (the same rule is correspondingly applied to the following).

Table 9

| Quality improver No. for farm products | | Strawberry Ascorbic acid concentration | Tomato Sugar content | Tomato Ascorbic acid concentration | Spinach Ascorbic acid concentration | Spinach Nitrate ion concentration |
|---|---|---|---|---|---|---|
| Invention product | 2-1 | 121 | 123 | 132 | 118 | 71 |
| | 2-2 | 126 | 127 | 138 | 121 | 65 |
| | 2-3 | 120 | 118 | 127 | 115 | 76 |
| | 2-4 | 120 | 121 | 129 | 117 | 73 |
| | 2-5 | 116 | 117 | 121 | 113 | 77 |
| | 2-6 | 117 | 122 | 131 | 117 | 75 |
| | 2-7 | 115 | 118 | 126 | 114 | 78 |
| | 2-8 | 113 | 114 | 120 | 112 | 80 |
| | 2-9 | 118 | 120 | 128 | 117 | 75 |
| | 2-10 | 114 | 115 | 122 | 112 | 79 |
| | 2-11 | 116 | 118 | 125 | 114 | 75 |
| | 2-12 | 118 | 121 | 131 | 117 | 73 |
| | 2-13 | 117 | 120 | 124 | 114 | 75 |
| | 2-14 | 116 | 119 | 126 | 115 | 76 |
| | 2-15 | 119 | 118 | 125 | 115 | 74 |
| | 2-16 | 118 | 119 | 130 | 115 | 75 |
| | 2-17 | 115 | 115 | 123 | 111 | 78 |
| | 2-18 | 117 | 119 | 130 | 112 | 76 |
| | 2-19 | 118 | 121 | 129 | 116 | 74 |
| | 2-20 | 119 | 122 | 126 | 115 | 75 |
| | 2-21 | 118 | 120 | 127 | 114 | 76 |
| | 2-22 | 118 | 119 | 122 | 111 | 76 |
| | 2-23 | 116 | 116 | 127 | 114 | 76 |
| Comparative product | 2-1 | 99 | 100 | 99 | 99 | 99 |
| | 2-2 | 96 | 99 | 97 | 96 | 100 |
| Non-treated area | | 100 | 100 | 100 | 100 | 100 |

Example 5 (Effect on a tomato)

A tomato "Momotaro Yoke" was planted, and subsequently the breed was subjected to soil-irrigating treatment with each quality improver for farm products in Table 10 at intervals of two times per month. The quality improver for farm products was used in such a manner that the (A) component had a concentration of 50 ppm (weight ratio), and the amount of treating water was set to 3000 L/10a. At harvest stage, the concentration of ascorbic acid in the fruits and the sugar content therein were examined. The measured values were compared as relative values when the value of a non-treated area was regarded as 100. The results are together shown in Table 10.

Table 10

| Quality improver No. for farm products | | Compound name | Treating concentration (ppm) | Sugar content | Ascorbic acid concentration |
|---|---|---|---|---|---|
| Invention product | 2-24 | (A)Lauryl alcohol<br>(B)POE(13) cetyl ether<br>(C) – | 500<br>250<br>0 | 106 | 116 |
| | 2-25 | (A)Myristyl alcohol<br>(B)Alkylglucoside [Mydol 12,Kao Corp.]<br>(C)Malic acid | 250<br>750<br>50 | 114 | 122 |
| | 2-26 | (A)Cetyl aocohol<br>(B)POE(80) hydrogenated castor oil<br>(C)Malonic acid | 100<br>1000<br>100 | 117 | 128 |
| | 2-27 | (A)Stearyl alcohol<br>(B)POE(20) sorbitane monooleic acid ester<br>(C)EDTA·4Na | 50<br>150<br>20 | 126 | 141 |
| | 2-28 | (A)Stearyl alcohol<br>(B)POE(20) sorbitan monooleic acid ester<br>(C) – | 50<br>150<br>0 | 122 | 135 |
| | 2-29 | (A)1,2-Octadecanediol<br>(B)POE(4.5) lauryl ether sodium acetate<br>(C)Succinic acid | 50<br>150<br>20 | 120 | 132 |
| | 2-30 | (A)2-Octadecanol<br>(B)POE(6) sorbitan monolaurric acid ester<br>(C)Succinic acid·3Na | 20<br>300<br>5 | 117 | 129 |
| | 2-31 | (A)Eicosanol<br>(B)Sucrose aliphatic acid ester [DK ester F160,Dai-ichi Kogyo Seiyaku Co.,Ltd.]<br>(C)Sodium heptonate | 50<br>500<br>20 | 116 | 126 |
| | 2-32 | (A)Tetracosanol<br>(B)Laurylamide propylbetaine<br>(C)Citric acid | 200<br>400<br>0 | 110 | 121 |
| Comparative prouct | 2-3 | (A) –<br>(B)POE(20) sorbitan monooleic acid ester<br>(C) – | 0<br>200<br>0 | 100 | 101 |
| | 2-4 | (A) –<br>(B)POE(3) lauryl ether sodium sulfate<br>(C) – | 0<br>500<br>0 | 99 | 96 |
| Non-treated area | | | – | 100 | 100 |

Example 6 (Effect on a chrysanthemum)

A chrysanthemum "Shuho no Chikara" was planted, and subsequently the breed was subjected to soil-irrigating treatment six times with each of quality improvers for farm products selected in Tables 7 and 8 of Example 4 at intervals of two times per month. Each of the quality improvers for farm products was used in such a manner that the (A) component had a concentration of 50 ppm (weight ratio), and the amount of treating water was set to 3000 L/10a. At harvest stage, the quality of the harvested chrysanthemum was examined. The quality was examined about 100 harvested chrysanthemum plants for each of the quality improvers for farm products. According to a forwarding standard for lighting-cultured chrysanthemums ("Handbook on Improvement of the Quality of Vegetables, Fruits and Gardening plants, edited by Japan Greenhouse Horticulture Association") published by Yokendo Co., Ltd., page 132) prescribed by Atsumi-gun in Aichi prefecture, the grades (Shu products and Yu products) and the classes (2L, L, M and S) thereof were evaluated and the ratios therebetween were examined. About the grades of "Shu" and "Yu", the grade "Shu" is a higher grade. About the classes, the weight becomes larger in the order of S → M → L → 2L. The results are shown in Table 11.

Table 11

| Quality improver No. for farm products | | "Shu" product | | | | "Yu" product | | |
|---|---|---|---|---|---|---|---|---|
| | | 2L(%) | L(%) | M(%) | S(%) | 2L(%) | L(%) | M(%) |
| Invention product | 2-2 | 84 | 16 | 0 | 0 | 0 | 0 | 0 |
| | 2-4 | 78 | 13 | 6 | 2 | 1 | 0 | 0 |
| | 2-6 | 76 | 14 | 7 | 3 | 0 | 0 | 0 |
| | 2-12 | 77 | 14 | 6 | 2 | 1 | 0 | 0 |
| | 2-19 | 78 | 13 | 5 | 2 | 2 | 0 | 0 |
| Comparative product | 2-1 | 58 | 12 | 13 | 5 | 6 | 4 | 2 |
| Non-treated area | | 56 | 12 | 13 | 6 | 5 | 5 | 3 |

Examples about improvement in low-temperature tolerance

Example 7

(7-1) Effect on a soybean

A soybean was sown in a 1/5000a Wagner pot, and as the cultivating soil, Kureha garden cultivating soil was used. After leaves were developed, each low-temperature tolerance improver for farm products in Tables 12 to 14 was foliar-sprayed one time. The low-temperature tolerance improver for farm products was used in such a manner that

the (A) component had a concentration of 50 ppm (weight ratio), and the amount of spraying water was set to 100 L/10a. After the treatment, the soybean was controlled under the condition of a temperature of 15°C. After two weeks, the SPAD value (Minolta Co., Ltd., SPAD 502) demonstrating the grass height and the greenness degree thereof were examined. The measured values were compared as relative values when the value of a non-treated area was regarded as 100. The results are shown in Tables 12 to 14. A proper cultivating temperature for the initial growth of soybeans is 15°C or more. It was understood that when the products of the present invention are used, the delay of growth due to low temperature can be suppressed.

(7-2) Effect on a chrysanthemum

A chrysanthemum "Shuho no Chikara" was planted, and subsequently the breed was subjected to foliar spray treatment four times with each low-temperature tolerance improver for farm products in Tables 12 to 14 at intervals of two times per month. The low-temperature tolerance improver for farm products was used in such a manner that the (A) component had a concentration of 60 ppm (weight ratio), and the amount of treating water was set to 100 L/10a. After the start of harvest stage, the chrysanthemum was frosted two times, so that its leaves withered. The leaf-withering ratio due to the frost was measured by the following method. The results are shown in Tables 12 to 14.

The leaf-withering ratio (%) = [(the number of withered leaves)/(the number of all leaves)] × 100

Table 12

| Law temperature tolerance improver No. for farm products | | Compound name | (A)/(B)/(C) weight ratio | Soybean | | Chrysanthemum |
|---|---|---|---|---|---|---|
| | | | | Grass height | SPAD value | Leaf-withering ratio (%) |
| Invention product | 3-1 | (A)Stearyl alcohol<br>(B)POE(20) sorbitan monooleic acid ester<br>(C) — | 25/75/0 | 116 | 120 | 30 |
| | 3-2 | (A)Stearyl alcohol<br>(B)POE(20) sorbitan monooleic acid ester<br>(C)EDTA·4Na | 23/69/8 | 118 | 125 | 25 |
| | 3-3 | (A)1,2-Octadecanediol<br>(B)POE(20)sorbitan tristearic acid ester<br>(C)Citric acid·3Na | 23/69/8 | 115 | 119 | 37 |
| | 3-4 | (A)Dioctadecyl ether<br>(B)POE(60)hydrogenated castor oil<br>(C)Sodium heptonate | 25/70/5 | 115 | 119 | 35 |
| | 3-5 | (A)2-Octadecanol<br>(B)POE(13) cetyl ether<br>(C) — | 33/67/0 | 113 | 115 | 38 |
| | 3-6 | (A)Stearic acid<br>(B)POE(80) hydrogenated castor oil<br>(C)Potassium oxalate | 25/70/5 | 114 | 116 | 34 |
| | 3-7 | (A)Stearyl stearate<br>(B)POE(3) lauryl ether sodium sulphate<br>(C)Citric acid | 23/69/8 | 112 | 114 | 37 |
| | 3-8 | (A)Myristic acid<br>(B)Laurylamide propylbataine<br>(C)Fumaric acid | 25/70/5 | 109 | 112 | 41 |
| Non-treated area | | — | — | 100 | 100 | 82 |

Table 13

| Law temperature tolerance improver No. for farm products | | Compound name | (A)/(B)/(C) weight ratio | Soybean | | Chrysanthemum |
|---|---|---|---|---|---|---|
| | | | | Grass height | SPAD value | Leaf-withering ratio (%) |
| Invention product | 3-9 | (A)Distearic acid ethylene glycol ester[Emanon 3201M, Kao Corp.]<br>(B)Sucrose aliphatic acid ester [DK ester F140,Di-ichi Kogyo Seiyaku Co.,Ltd]<br>(C)Citric acid | 25/70/5 | 114 | 118 | 35 |
| | 3-10 | (A)$C_{18}H_{37}O(EO)_5C_{18}H_{37}$<br>(B) —<br>(C) — | 100/0/0 | 112 | 113 | 38 |
| | 3-11 | (A)$C_{18}H_{37}O(EO)_5C_{18}H_{37}$<br>(B) —<br>(C)EDTA·4Na | 70/0/30 | 114 | 115 | 36 |
| | 3-12 | (A)Batyl alcohol<br>(B)POE(20)sorbitan monooleic acid ester<br>(C)Citric acid | 23/69/8 | 114 | 117 | 34 |
| | 3-13 | (A)Glyceric acid stearyl ester<br>(B)POE(20)sorbitan monooleic acid ester<br>(C)Malonic acid | 23/69/8 | 113 | 116 | 34 |
| | 3-14 | (A)glyceric acid stearylamide<br>(B)POE(40) sorbit tetraoleic acid ester<br>(C)Malic acid | 23/69/8 | 113 | 115 | 36 |
| | 3-15 | (A)Stearic acid monoglyceride<br>(B)Alkylglucoside[Myol 12,Kao Corp]<br>(C)Malonic acid | 23/69/8 | 114 | 118 | 39 |
| | 3-16 | (A)Glycerin carbonate<br>(B)Alkylglucoside[Mydol, Kao Corp.]<br>(C) — | 25/75/0 | 112 | 117 | 35 |
| | 3-17 | (A)Hexaglycerin stearic acid ester<br>(B)POE(6) sorbitan monolauric acid ester<br>(C) — | 25/75/0 | 111 | 114 | 40 |
| Non-treated area | | — | — | 100 | 100 | 82 |

Table 14

| | Law temperature tolerance improver No. for farm products | Compound name | (A)/(B)/(C) weight ratio | Soybean | | Chrysanthemum |
|---|---|---|---|---|---|---|
| | | | | Grass height | SPAD value | Leaf-withering ratio (%) |
| Invention product | 3-18 | (A)Glyceric acid diglyceride<br>(B)POE(12) stearyl ether<br>(C) — | 25/75/0 | 113 | 118 | 38 |
| | 3-19 | (A)Citric acid $C_{18}$monoamide<br>(B)Sucrose aliphatic acid ester [DK ester F160,Dai-ichi Kogyo Seiyaku Co.,Ltd.]<br>(C)Succinic acid | 23/69/8 | 115 | 117 | 34 |
| | 3-20 | (A)Citric acid $C_{18}$ alkyl monoester<br>(B)POE(20) lauryl ether<br>(C)Malic acid | 23/69/8 | 115 | 118 | 36 |
| | 3-21 | (A)Citric acid $C_{18}$ diamide<br>(B)POE(4.5) lauryl ether sodium acetate<br>(C)EDTA·2Na | 23/69/8 | 113 | 117 | 37 |
| | 3-22 | ($A_i$)Stearyl alcohol<br>($A_{ii}$)Dioctadecyl ether<br>(B)POE(20) sorbitan monooleic acid ester<br>(C)Citric acid·3Na | 10/85/5<br>[($A_i$)/($A_{ii}$)=1/1] | 115 | 117 | 32 |
| | 3-23 | ($A_i$)Stearyl alcohol<br>($A_{iii}$)Stearic acid<br>(B)POE(80) hydrogenated castor oil<br>(C) — | 14/86/0<br>[($A_i$)/($A_{iii}$)=1/1] | 114 | 119 | 34 |
| Comparative product | 3-1 | (A) —<br>(B)POE(20) sorbitan monooleic acid ester<br>(C) — | 0/100/0 | 99 | 98 | 80 |
| | 3-2 | (A) —<br>(B)POE(3) lauryl ether sodium sulphate<br>(C) — | 0/100/0 | 96 | 95 | 81 |
| Non-treated area | | — | — | 100 | 100 | 82 |

In Tables 12 to 14, POE is an abbreviation of polyoxyethylene, and a numerical value inside each parenthesis is the average number of added molecules of ethylene oxide (the same rule is correspondingly applied to the following).

Example 8 (Effect on a tobacco)

At the time of growing young plants of a tobacco, the breed was subjected to soil-irrigating treatment two times with each low-temperature tolerance improver for farm products in Table 4 at the interval of one time per week.

The low-temperature tolerance improver for farm products was used in such a manner that the (A) component had a concentration of 50 ppm (weight ratio), and the amount of spraying solution was set to 3 L/$m^2$. The grown young plants were planted in a regular field, but after seven days they were frosted. The area of withered leaves was measured immediately after the plants were frosted. The withered leaf area ratio thereof was calculated from the following equation. The results are shown in Table 15.

The withered leaf area ratio = [(the leaf area of withered moieties) / (the area of all leaves)] $\times$ 100

Table 15

| Law-twnperature tolerance improver No. for farm proucts | | Compond name | Treating concentration (ppm) | Withered leaf area ratio |
|---|---|---|---|---|
| Invention product | 3-24 | (A)Lauryl alcohol<br>(B)POE(13) cetyl ether<br>(C) — | 500<br>250<br>0 | 15 |
| | 3-25 | (A)Myristyl alcohol<br>(B)Alkylglucoside[Mydol 12,Kao Corp.]<br>(C)Malic acid | 250<br>750<br>50 | 12 |
| | 3-26 | (A)Cetyl alcohol<br>(B)POE(80) hydrogenated castor oil<br>(C)Malonic acid | ·100<br>1000<br>100 | 10 |
| | 3-27 | (A)Stearyl alcohol<br>(B)POE(20) sorbitane monooleic acid ester<br>(C)EDTA·4Na | 50<br>150<br>20 | 6 |
| | 3-28 | (A)Stearyl aocohol<br>(B)POE(20) sorbitan monooleic acid ester<br>(C) — | 50<br>150<br>0 | 9 |
| | 3-29 | (A)1,2-Octadecanediol<br>(B)POE(4.5) lauryl ether sodium acetate<br>(C)Succinic acid | 50<br>150<br>20 | 11 |
| | 3-30 | (A)2-Octadecanol<br>(B)POE(6) sorbitan monolauric acid ester<br>(C)Citric acid·3Na | 20<br>300<br>5 | 14 |
| | 3-31 | (A)Eicosanol<br>(B)Sucrose aliphatic acid ester [DK ester F160,Dai-ichi Kogyo Seiyaku Co..Ltd.]<br>(C)Sodium heptonate | 50<br>500<br>20 | 16 |
| | 3-32 | (A)Tetracosanol<br>(B)Laurylamide propylbetaine<br>(C)Citric acid | 200<br>400<br>0 | 20 |
| Comparative product | 3-3 | (A) —<br>(B)POE(20) sorbitan monooleic acid ester<br>(C) — | 0<br>200<br>0 | 69 |
| | 3-4 | (A) —<br>(B)POE(3)lauryl ether sodium sulphate<br>(C) — | 0<br>500<br>0 | 70 |
| Non-treated area | | | — | 70 |

## Claims

1. A method of increasing the yield of the farm products, improving the quality thereof or improving the low-temperature tolerance thereof by applying at least one compound (A) selected from the group consisting of the following (1) to (5) to farm products:

   (1) a compound represented by the following formula (1-1):

   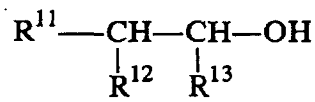

   (1 − 1)

   wherein $R^{11}$ represents a hydrocarbon group having 10 to 22 carbon atoms, $R^{12}$ represents a hydrogen atom, a hydroxyl group, or a hydrocarbon group having 1 to 24 carbon atoms, and $R^{13}$ represents a hydrogen atom or a hydrocarbon group having 1 to 24 carbon atoms;
   (2) a compound represented by the following formula (2-1):

   $$R^{21}\text{-O- (AO)m-}R^{22} \qquad (2\text{-}1)$$

   wherein $R^{21}$ represents a hydrocarbon group which has 12 to 24 carbon atoms and may have one or more hydroxyl groups, $R^{22}$ represents a hydrogen atom, or a hydrocarbon group which has 1 to 24 carbon atoms and may have one or more hydroxyl groups, AO represents an oxyalkylene group which has 2 to 4 carbon atoms, m is the average number of added alkylene oxide molecules and represents a numerical value of 0 to 5, provided that when m is 0, $R^{22}$ is not a hydrogen atom;
   (3) a compound represented by the following formula (3-1):

   $$R^{31}\text{-COO-(AO)}_n\text{-}R^{32} \qquad (3\text{-}1)$$

   wherein $R^{31}$ represents a hydrocarbon group which has 11 to 29 carbon atoms and may have one or more hydroxyl groups, $R^{32}$ represents a hydrogen atom, a hydrocarbon group which has 1 to 30 carbon atoms and may have one or more hydroxyl groups,-$COR^{33}$ (wherein $R^{33}$ represents a hydrocarbon group having 11 to 23 carbon atoms), or a counter ion, AO represents an oxyalkylene group which has 2 to 4 carbon atoms, and n is the average number of added alkylene oxide molecules and represents a numerical value of 0 to 5;
   (4) an organic acid derivative wherein a group or groups containing 1 to 30 carbon atoms is/are bonded to an organic acid having at least two functional groups at a position or positions of the functional group(s); and
   (5) a glycerin derivative.

2. The method according to claim 1, wherein the compound is (1) and is a monovalent alcohol having 12 to 24 carbon atoms in the formula (1-1)

3. The method according to claim 1 or 2, wherein at least one selected from a surfactant (B) other than the compounds (1) to (5), a chelating agent (C) and a fertilizer (D) is further comprised.

4. The method according to claim 1, wherein the yield of the farm products is increased.

5. The method according to claim 1, wherein the quality of the farm products is improved.

6. The method according to claim 1, wherein the low-temperature tolerance of the farm products is improved.

7. Use of at least one compound (A) selected from the group consisting of the followings (1) to (5) recited in claim 1 for increasing the yield of farm products, improving the quality thereof, or improving the low-temperature tolerance thereof:

## INTERNATIONAL SEARCH REPORT

International application No.
PCT/JP02/02136

A. CLASSIFICATION OF SUBJECT MATTER
Int.Cl[7] A01N31/04, 31/14, 37/02, 37/04, 37/12, 37/18, 37/36, 43/16, A01G7/00

According to International Patent Classification (IPC) or to both national classification and IPC

B. FIELDS SEARCHED

Minimum documentation searched (classification system followed by classification symbols)
Int.Cl[7] A01N31/04, 31/14, 37/02, 37/04, 37/12, 37/18, 37/36, 43/16, A01G7/00

Documentation searched other than minimum documentation to the extent that such documents are included in the fields searched

Electronic data base consulted during the international search (name of data base and, where practicable, search terms used)
WPI(DIALOG)

C. DOCUMENTS CONSIDERED TO BE RELEVANT

| Category* | Citation of document, with indication, where appropriate, of the relevant passages | Relevant to claim No. |
|---|---|---|
| P,X | JP 2001-316208 A (Kao Corp.), 13 November, 2001 (13.11.01), (Family: none) | 1-7 |
| P,X | JP 2001-316207 A (Kao Corp.), 13 November, 2001 (13.11.01), (Family: none) | 1-7 |
| P,X | JP 2001-316205 A (Kao Corp.), 13 November, 2001 (13.11.01), (Family: none) | 1-7 |
| P,X | JP 2001-288010 A (Kao Corp.), 16 October, 2001 (16.10.01), (Family: none) | 1-7 |

[X] Further documents are listed in the continuation of Box C.    [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 24 May, 2002 (24.05.02) | 11 June, 2002 (11.06.02) |
| Name and mailing address of the ISA/ Japanese Patent Office | Authorized officer |
| Facsimile No. | Telephone No. |

Form PCT/ISA/210 (second sheet) (July 1998)

## INTERNATIONAL SEARCH REPORT

International application No. PCT/JP02/02136

C (Continuation). DOCUMENTS CONSIDERED TO BE RELEVANT

| Category* | Citation of document, with indication, where appropriate, of the relevant passages | Relevant to claim No. |
|---|---|---|
| X | JP 2000-95607 A (Mitsubishi-kagaku Foods Corp.), 04 April, 2000 (04.04.00), (Family: none) | 1-7 |
| X | US 5439873 A (Plant Growth Development Corp.), 08 August, 1995 (08.08.95), & WO 95/022900 A1 & JP 10-504797 A | 1-7 |
| X | JP 6-312967 A (Sumitomo Chemical Co., Ltd.), 08 November, 1994 (08.11.94) (Family: none) | 1-7 |
| X | JP 5-58808 A (Takasago International Corp.), 09 March, 1993 (09.03.93), (Family: none) | 1-7 |
| X | JP 1-290606 A (Nittoh-Bion Co., Ltd.), 22 November, 1989 (22.11.89), (Family: none) | 1-7 |
| X | EP 149034 A2 (Teijin Ltd.), 24 July, 1985 (24.07.85), & JP 61-65846 A & JP 61-65844 A & US 4902334 A | 1-7 |
| X | US 4626277 A (Agro-Kanesho Co., Ltd.), 02 December, 1986 (02.12.86), & JP 61-1602 A & EP 167026 A1 | 1-7 |
| X | WO 83/03041 A1 (Biochemical Marketing Corp.), 15 September, 1983 (15.09.83), & EP 103644 A1 & JP 59-500319 A | 1-7 |
| X | JP 55-100304 A (Japan Synthetic Rubber Co., Ltd.), 31 July, 1980 (31.07.80), (Family: none) | 1-7 |
| X | US 4182621 A (Otsuka Kagaku Yakuhin Kabushiki Kaisha), 08 January, 1980 (08.01.80), & JP 54-147922 A | 1-7 |
| X | JP 48-23723 A (CIBA-Geigy AG.), 27 March, 1973 (27.03.73), & US 3872141 A | 1-7 |
| A | JP 9-69 A (Sumitomo Chemical Co., Ltd.), 07 January, 1987 (07.01.87), (Family: none) | 1-7 |
| A | EP 765602 A1 (Kao Corp.), 02 April, 1997 (02.04.97), & JP 5-345702 A & US 5912208 A | 1-7 |

Form PCT/ISA/210 (continuation of second sheet) (July 1998)

**INTERNATIONAL SEARCH REPORT**

International application No.
PCT/JP02/02136

C (Continuation). DOCUMENTS CONSIDERED TO BE RELEVANT

| Category* | Citation of document, with indication, where appropriate, of the relevant passages | Relevant to claim No. |
|---|---|---|
| A | US 5489569 A (Buckman Laboratories International Inc.),<br>06 February, 1996 (06.02.96),<br>& WO 94/13140 A1 & EP 673197 A1<br>& JP 8-507493 A | 1-7 |
| A | JP 7-87845 A (Takasago International Corp.),<br>04 April, 1995 (04.04.95),<br>(Family: none) | 1-7 |

Form PCT/ISA/210 (continuation of second sheet) (July 1998)